# NEUE EUROPÄISCHE PATENTSCHRIFT

(11) **EP 2 288 523 B2**
(45) Veröffentlichungstag und Bekanntmachung des Hinweises auf die Entscheidung über den Einspruch: **29.08.2018**
(45) Hinweis auf die Patenterteilung: 25.04.2012
(21) Anmeldenummer: 09765562.5
(22) Anmeldetag: 10.06.2009
(51) Int. Cl.: B60T 8/00, B60T 17/22, B60T 13/68

(54) **ÜBERWACHUNGSEINRICHTUNG ZUR ÜBERWACHUNG VON SYSTEMEN EINES FAHRZEUGS**
MONITORING DEVICE FOR MONITORING VEHICLE SYSTEMS
DISPOSITIF DE SURVEILLANCE DE SYSTÈMES VÉHICULAIRES

(30) Priorität: 20.06.2008 DE 102008029310
(43) Veröffentlichungstag der Anmeldung: 02.03.2011
(73) Patentinhaber: KNORR-BREMSE Systeme für Nutzfahrzeuge GmbH, 80809 München (DE)
(72) Erfinder: HERGES, Michael, 80935 München (DE); RÖTHER, Friedbert, 74389 Cleebronn (DE); STEINBERGER, Jürgen, 82194 Gröbenzell (DE); FRANK, Péter, H-1112 Budapest (HU)
(74) Vertreter: Wiedemann, Markus
(86) Internationale Anmeldenummer: PCT/EP2009/004161
(87) Internationale Veröffentlichungsnummer: WO 2009/152982

(56) Entgegenhaltungen:
- EP-A1- 2 108 554
- EP-A2- 0 357 922
- EP-A2- 1 541 437
- WO-A1-2008//092683
- DE-A1- 10 201 453
- DE-A1- 10 320 608
- DE-A1- 10 336 611
- DE-A1- 19 510 522
- DE-A1- 2005 043 608
- DE-A1-102005 024 120
- DE-A1-102006 055 570
- DE-C1- 10 006 656
- DE-T2- 69 402 117
- DE-T2- 69 402 117
- US-A1- 20060 020 378

## Beschreibung

### Stand der Technik

Die Erfindung betrifft eine Überwachungseinrichtung zur Überwachung von Systemen eines Fahrzeugs gemäß Anspruch 1.

Aus dem Stand der Technik, beispielsweise aus der DE 694 02 117 T2 ist ein elektronisches Bremssystem EBS mit einem Prüfungssystem zur Prüfung der Bremsen bekannt.

Elektronische Bremssysteme (EBS) können Eigenüberwachungseinrichtungen und Rückfallebenen umfassen, die sich nur auf eigene oder auf dem Fahrzeugbus befindliche Messwerte stützen.

Die gattungsgemäße EP 0357 922 A2 offenbart eine Druckmittel-Betriebsbremsvorrichtung eines Fahrzeugs, wobei ein Mikrorechner des Bremssteuergeräts im Rahmen eines Selbsttestprogramms eine Selbstüberwachung durchführen kann. Weiterhin werden Signale von Gebern wie auch von weiteren elektrischen Komponenten der Druckmittel-Betriebsbremsvorrichtung durch Plausibilitätsvergleiche überprüft. Falls ein Fehler detektiert wird, so wird die Stromversorgung zu Ventiltreiberstufen unterbrochen bzw. bei Fehlern im elektrischen System ein Fehlersignal erzeugt und eine Warneinrichtung betätigt.

Auch bei der Bremsanlage gemäß DE 195 10 522 A1 findet eine Fehlererkennung durch Plausibilitätsprüfung mittels eines Vergleichs von Betätigungskraft F und Pedalweg X bei Betätigung eines Bremspedals statt. Bei Fehlerkennung wird die Bremsanlage auf einen Notbetrieb umgeschaltet, indem von einem elektrischen Bremskreis auf einen druckmittelgesteuerten Bremskreis umgeschaltet wird.

Beim zitierten Stand der Technik werden Überwachungsfunktionen wie Fehlerdetektion, Fehlerauswertung und die Einleitung von Gegenmaßnahmen von nur einem einzigen System, nämlich einer Steuereinheit oder einem Mikrocomputer durchgeführt.

### Aufgabe der Erfindung

Die Aufgabe der Erfindung besteht demgegenüber darin, eine Überwachungseinrichtung von Systemen eines Fahrzeugs der eingangs erwähnten Art derart weiterzubilden, dass ein fehlerhaftes Verhalten eines Systems mit größerer Sicherheit erkannt wird.

Diese Aufgabe wird gemäß der Erfindung durch die Merkmale von Anspruch 1 gelöst.

### Offenbarung der Erfindung

Die Erfindung schlägt eine Überwachungseinrichtung zur Überwachung von Systemen eines Fahrzeugs vor, von denen wenigstens einige Systeme Selbstüberwachungsroutinen zur Selbstüberwachung aufweisen, wobei bei Detektierung einer Störung oder eines Fehlers in wenigstens einer einem ersten der Systeme zugeordneten Funktion durch Selbstüberwachungsroutinen dieses ersten Systems ein zweites System durch das eine, den Fehler oder die Störung aufweisende erste System aktiviert wird, um durch dem zweiten System zugeordnete Sensoren den Fehler oder die Störung in der wenigstens einen Funktion des ersten Systems zu erkennen und/oder einzugrenzen und um ein Notlaufprogramm des zweiten Systems als Ersatz für die gestörte Funktion des ersten Systems zu aktivieren.

Dabei werden vom ersten System besondere Überwachungsroutinen im zweiten System über Befehle, die über den Datenbus übermittelt werden, angestoßen und im zweiten System ausgeführt. Deren Ergebnisse werden dem ersten System, ebenfalls über den Datenbus, zurückgemeldet und dort, gegebenenfalls zusammen mit allgemeinen Daten, die das erste System selbst ermittelt und/oder die auf dem vorliegenden Fahrzeugbus standardmäßig übertragen werden, ausgewertet. Das zweite System benutzt dazu seine Sensoren, eventuell ebenfalls unter Zuhilfenahme von Fahrzeugbusdaten. Das Anstoßen der Routinen und Auswerten der Ergebnisse kann auch von einem dritten System, z.B. einem zentralen Fahrzeugrechner übernommen werden, wenn das erste System einen entsprechenden Fehler gemeldet hat oder ein entsprechender Fehler im ersten System vom überwachenden dritten System detektiert worden ist.

Da das erste und das zweite System, eine Feststellbremseinrichtung und eine elektronische Betriebsbremseinrichtung eines Fahrzeugs in der Regel an unterschiedlichen Positionen bzw. Stellen des Fahrzeugs Sensoren und Aktuatoren besitzen, ergeben sich bessere Möglichkeiten, ein fehlerhaftes Verhalten eines Fahrzeugsystems, insbesondere einer Fahrzeugbremsanlage zu erkennen und/oder dessen Ursache einzugrenzen. Dadurch kann die Sicherheit erhöht und die Reparatur erleichtert werden. Ferner können unnötige Reparaturmaßnahmen vermieden werden, die bei Unkenntnis der wirklichen Ursache der Funktionsstörung ausgeführt werden würden.

Im Falle eines Fehlers in einem der Systeme besteht auch die Möglichkeit, Funktionen vom jeweils anderen System - eventuell mit eingeschränkter Funktionalität - ausführen zu lassen (Backup-Funktion). Die Ausführung dieser Funktionen kann dabei vom Fehler behafteten ersten System selbst, wenn es den Fehler im Fehler behafteten System erkannt hat, angestoßen werden. Damit wird eine höhere Verfügbarkeit der Systeme erzielt.

Durch die in den Unteransprüchen aufgeführten Maßnahmen sind vorteilhafte Weiterbildungen und Verbesserungen der in Anspruch 1 angegebenen Erfindung möglich.

Vorzugsweise erkennen die Eigenüberwachungsroutinen und/oder die Fremdüberwachungsroutinen den wenigstens einen Fehler oder eine Störung einer Funktion des ersten Systems durch die Art der von dem ersten System ausgesteuerten Signale und/oder durch ein Ausbleiben von von dem ersten System ausgesteuerten Signale.

Erfindungsgemäss ist das erste System eine elektrische Feststellbremseinrichtung (ECPB) und das zweite System eine elektrische Betriebsbremseinrichtung (EBS) eines Zugfahrzeugs einer Zugfahrzeug-Anhängerkombination.

Genaueres geht aus der nachfolgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: einen schematischen Schaltplan eines Bremssystems eines Zugfahrzeugs einer Zugfahrzeug-Anhänger-Kombination beinhaltend eine elektrische Feststellbremseinrichtung (ECPB) mit einem Parkbremsmodul (PBM) und eine elektrische Betriebsbremseinrichtung (EBS) mit einem Anhängersteuermodul (TCM) und;
- Fig.2: einen schematischen Schaltplan des Parkbremsmoduls (PBM) von Fig.1;
- Fig.3: einen schematischen Schaltplan des Anhängersteuermoduls (TCM) von Fig.1.

### Beschreibung des Ausführungsbeispiels

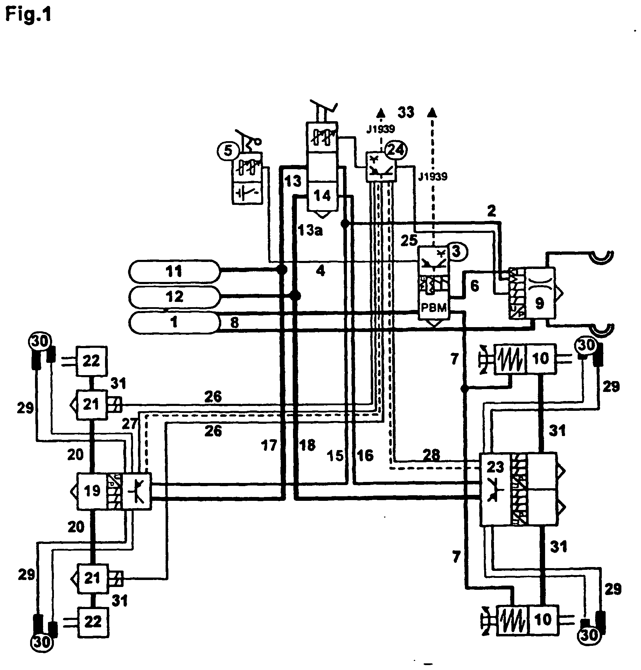

Das in Fig.1 schematisch gezeigte Bremssystem eines Zugfahrzeugs einer Zugfahrzeug-Anhänger-Kombination beinhaltet eine elektrische Feststellbremseinrichtung mit einem Parkbremsmodul (PBM) und eine elektrische Betriebsbremseinrichtung (EBS) mit Anhängersteuermodul (TCM). Im Einzelnen umfasst das Bremssystem:
- Einen Druckluftvorrat 1,
- eine pneumatische Steuerleitung 2, welche von einem Fußbremsmodul (FBM) 14 zu einem Anhängersteuermodul (TCM) 9 führt,
- ein Parkbremsmodul (PBM) 3,
- elektrische Steuerleitungen 4 für das Parkbremsmodul (PBM) 3,
- eine Handbetätigungseinrichtung 5 für das Parkbremsmodul (PBM) 3,
- eine pneumatische Steuerleitung 6 zwischen dem Parkbremsmodul (PBM) 3 und dem Anhängersteuermodul (TCM) 9,
- pneumatische Steuerleitungen 7 zwischen dem Parkbremsmodul (PBM) 3 und Federspeicherbremszylindern 10 der Hinterachse,
- pneumatische Vorratsleitungen 8 zwischen dem Druckluftvorrat 1 und dem Parkbremsmodul (PBM) 3 bzw. dem Anhängersteuermodul (TCM) 9,
- das Anhängersteuermodul (TCM) 9,
- die Federspeicherbremszylinder 10 der Hinterachse,
- einen Druckluftvorrat 11,
- einen Druckluftvorrat 12,
- eine pneumatische Vorratsleitung 13 vom Druckluftvorrat 11 zum Fußbremsmodul 14,
- eine pneumatische Vorratsleitung 13a vom Druckluftvorrat 12 zum Fußbremsmodul 14,
- das Fußbremsmodul 14,
- eine pneumatische Steuerleitung 15 zwischen dem Fußbremsmodul 14 und einem einkanaligen Vorderachs-Druckregelmodul 19,
- eine pneumatische Steuerleitung 16 zwischen dem Fußbremsmodul 14 und einem zweikanaligen Hinterachs-Druckregelmodul 23,
- eine pneumatische Vorratsleitung 17 zwischen dem Druckluftvorrat 11 und dem Vorderachs-Druckregelmodul 19,
- eine pneumatische Vorratsleitung 18 zwischen dem Druckluftvorrat 12 und dem Hinterachs-Druckregelmodul 23,
- das Vorderachs-Druckregelmodul 19,
- Druckleitungen 20 zwischen dem Vorderachs-Druckregelmodul 19 und Drucksteuerventilen 21,
- Drucksteuerventile 21 für die ABS-Funktion der Vorderachse, z.B. select-low, select-high oder select-smart,
- Betriebsbremszylinder 22 der Vorderachse,
- das zweikanalige Druckregelmodul 23 der Hinterachse,
- ein Steuergerät (ECU) 24 des elektronischen Bremssystems (EBS),
- elektrische Steuerleitungen 25 zwischen dem Steuergerät (ECU) 24 des elektronischen Bremssystems (EBS) und dem Anhängersteuermodul (TCM) 9,
- elektrische Steuerleitungen 26 zwischen dem Steuergerät (ECU) 24 des elektronischen Bremssystems (EBS) und den Drucksteuerventilen 21 der Vorderachse,
- elektrische Energieversorgungsleitungen und CAN-Datenbus 27 zwischen dem Steuergerät (ECU) 24 des elektronischen Bremssystems (EBS) und dem Druckregelmodul 19 der Vorderachse,
- elektrische Energieversorgungsleitungen und CAN-Datenbus 28 zwischen dem Steuergerät (ECU) 24 des elektronischen Bremssystems (EBS) und dem Druckregelmodul 23 der Hinterachse,
- Sensorkabel 29,
- Radgeschwindigkeitssensoren 30,
- Bremsdruckleitungen 31 zwischen den Drucksteuerventilen 19 und den Betriebsbremszylindern 22 der Vorderachse bzw. zwischen dem Druckregelmodul 23 und den Federspeicherbremszylindern 10 der Hinterachse,
- CAN (Control Area Network) -Datenbusleitungen 33, z.B. J1939.

An der Hinterachse des Zugfahrzeugs sind neben den Federspeicherbremszylindern 10 auch Betriebsbremszylinder vorhanden, in Fig.1 aber nicht explizit gezeigt. Bevorzugt sind die Betriebsbremszylinder und die Federspeicherbremszylinder in Kombizylindern integriert.

Der Aufbau des Fußbremsmoduls (FBM) 14 für eine elektrische Betriebsbremseinrichtung EBS ist ähnlich den konventionellen rein pneumatischen Fußbremsventilen (FBV). Zusätzlich werden im Fußbremsmodul (FBM) 14 jedoch die elektronischen Sollwerte für die Bremskraftregelung erfasst. Das Fußbremsmodul (FBM) 14 erfüllt somit zwei Aufgaben.
- Zwei redundante Sensoren (z.B. Potentiometer) erfassen den Bremswunsch des Fahrers, indem sie den Betätigungsweg eines FBM-Stößels messen. Der Messwert wird redundant an das zentrale Steuergerät EBS-ECU 24 übertragen und dort in eine Bremsanforderung umgerechnet.
- Analog zu einem konventionellen Fußbremsventil FBV wird der pneumatische Steuerungsdruck entsprechend des Betätigungsweges ausgesteuert. Diese Steuerdrücke werden für die Backup-Steuerung für den Fall eines Fehlers in der elektrischen Betriebsbremseinrichtung EBS benötigt.

Die Druckregelmodule 19, 23 bilden die Schnittstelle zwischen der elektrischen Betriebsbremseinrichtung EBS und der pneumatischen Bremskraft. Sie setzen die über den Datenbus CAN J1939 übertragenen Bremssolldrücke in pneumatische Drücke um. Die Umsetzung erfolgt mit Proportionalmagneten oder mit einer Ein-/Auslassmagnetkombination. Ein Drucksensor misst den ausgesteuerten Bremsdruck. Somit kann eine Bremsdruckregelung in einem geschlossenen Regelkreis stattfinden. Ein elektrisch aktiviertes Backup-Magnetventil sperrt die pneumatischen Steuerdrücke des Fußbremsmoduls FBM 14 ab, um eine nicht beeinflusste elektrische Druckregelung zu ermöglichen.

Die Installation der Druckregelmodule 19, 23 in Radnähe ermöglicht den Anschluss der Sensoren 30 für die Radgeschwindigkeit und den Bremsbelagverschleiß über kurze elektrische Leitungen. Diese Signale werden über den Datenbus CAN J1939 zum zentralen Steuergerät EBS-ECU 24 übertragen.

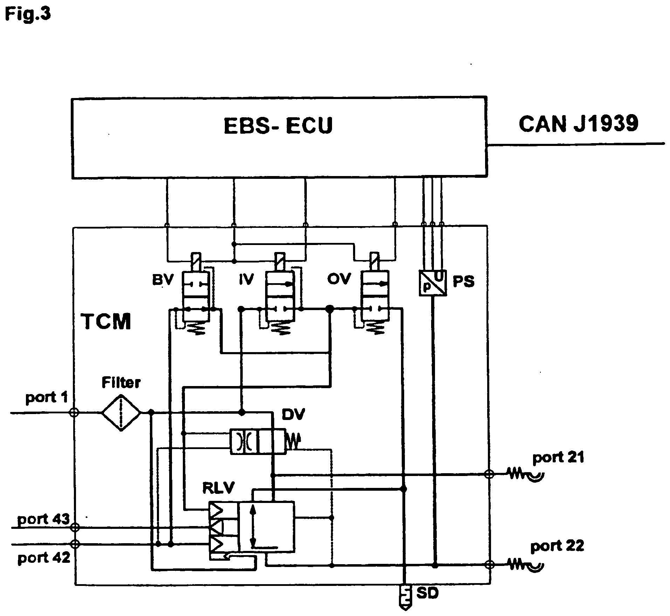

Das elektronische Anhängersteuermodul TCM 9 ermöglicht die Regelung des Anhängersteuerdrucks entsprechend der funktionalen Anforderungen der elektrischen Betriebsbremseinrichtung EBS. Die Grenzen der elektrischen Regelbereiche sind in gesetzlichen Anforderungen festgelegt. Das Umsetzen des elektronisch vorgegebenen Sollwertes in einen ausgesteuerten Druck erfolgt mit einer ähnlichen Magnetanordnung wie in den Druckregelmoduln 19, 23. Das Sperren des back-up-Drucks erfolgt je nach Konstruktionsprinzip über ein Back-up-Magnetventil BV (siehe Fig.3) oder durch pneumatische Rückhaltung.

Das Ansteuern des Anhängersteuermoduls TCM 9 muss unter allen Normalbedingungen mit zwei unabhängigen Steuersignalen erfolgen. Dies können zwei pneumatische Signale aus zwei Steuerkreisen oder ein pneumatisches und ein elektrisches Steuersignal sein. Das elektrische Steuersignal muss in diesem Fall jedoch unter allen regulären Betriebszuständen zur Verfügung stehen.

Das Betätigen des Fußbremsmoduls FBM 14 führt zu einer Berechnung des Bremswunsches im zentralen Steuergerät EBS-ECU 24. Gleichzeitig werden die Back-up-Magnetventile in den Druckregelmoduln 19, 23 aktiviert und die pneumatischen Steuerdrücke abgesperrt. Das elektronische Steuergerät EBS-ECU 24 berechnet nun abhängig von Abbremsungswunsch, Fahrzeugmasse, Achslastverteilung usw. den optimalen Bremsdruck. Dieser Sollbremsdruck wird über den Datenbus CAN J1939 an die Druckregelmoduln 19, 23 übertragen.

Entsprechend der Anordnung steuern die Druckregelmoduln 19, 23 den Bremsdruck achs- oder radweise in die Bremszylinder 22 ein. Über einen CAN ISO 11992 wird ein dem Anhängersteuerdruck entsprechender Abbremsungswunsch an die elektrische Betriebsbremseinrichtung EBS des Anhängers übermittelt.

Für Funktionen wie ASR (Antriebsschlupfregelung) oder ESP (Elektronisches Stabilitäts-Programm) wird unabhängig vom Fahrerwunsch Bremsdruck in den Druckregelmoduln 19, 23 aufgebaut und in die Bremszylinder 22 eingeregelt.

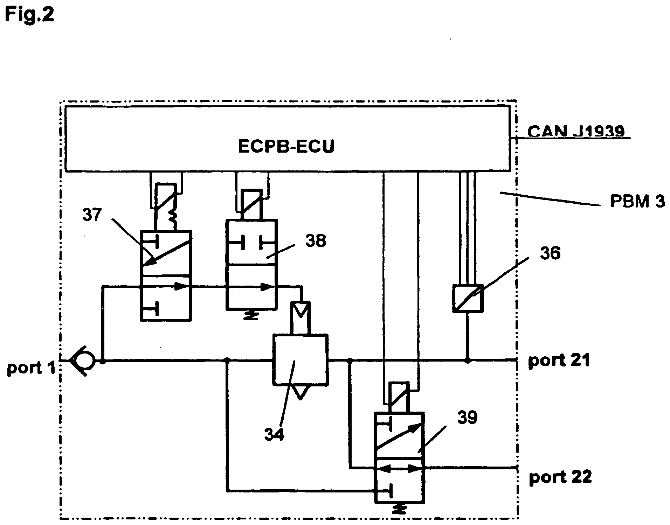

Das Parkbremsmodul (PBM) 3 beinhaltet gemäß Fig.2
- ein Relaisventilteil 34, das abhängig vom Druck in seiner Steuerkammer einen Druck in seiner Arbeitskammer einregelt, welcher an einem Anschluss port 21 des Parkbremsmoduls 3 ansteht, der über die pneumatischen Steuerleitungen 7 (siehe Fig.1) mit den Federspeicherzylindern 10 der Hinterachse in Verbindung steht,
- einen Drucksensor 36, der den Druck in der Arbeitskammer des Relaisventils 34 misst,
- ein bistabiles 3/2-Wege-Magnetventil 37 zum permanenten Be- oder Entlüften der Steuerkammer des Relaisventils 34,
- ein 2/2-Wege-Magnetventil 38 zum Halten des Drucks in der Steuerkammer des Relaisventils 34,
- ein 3/2-Wege-Magnetventil 39 (Testmagnet) zum Durchsteuern des Drucks in der Arbeitskammer des Relaisventils 34 oder eines an einem Vorratsanschluss port 1 anstehenden Vorratsdrucks zu einem Anhängeranschluss port 22,
- ein Steuergerät ECPB-ECU 40 der Feststellbremseinrichtung ECPB, welches die Ventile 37, 38, 39 steuert und Signale vom Drucksensor 36 empfängt sowie an den Fahrzeugdatenbus CAN J1939 angeschlossen ist.

Das Anhängersteuermodul TCM 9 gemäß Fig.3 beinhaltet:
- ein dreifach angesteuertes Relaisventil RLV,
- ein Backup-Ventil BV,
- ein Einlassventil IV,
- ein Auslassventil OV,
- ein Drosselventil DV,
- einen Drucksensor PS zur Messung des Drucks in der Anhängerbremsleitung, welche an einen Anschluss port 22 angeschlossen ist, der zu einem Kupplungskopf "Bremse" des Zugfahrzeugs führt und den Anhänger mit Steuerdruck für die Anhängerbremse versorgt,
- einen Anschluss port 21, der zu einem Kupplungskopf "Vorrat" des Zugfahrzeugs führt und den Anhänger mit Vorratsdruck versorgt,
- einen Anschluss port 43, an welchen der port 22 des Parkbremsmoduls (PBM) 3 (Fig.2) über die pneumatische Steuerleitung 6 angeschlossen ist,
- einen Anschluss port 42, an welchen die vom Fußbremsmodul (FBM) 14 herangeführte pneumatische Steuerleitung 2 angeschlossen ist und in welchen der pneumatische Steuerdruck des Fußbremsmoduls (FBM) 14 eingesteuert wird,
- einen Anschluss port 1, an welchen der Druckluftvorrat 1 angeschlossen ist,
- eine Entlüftung SD, welche an das Auslassventil OV angeschlossen ist.

Die Ventile BV, IV, OV des Anhängersteuermoduls (TCM) 9 werden vom Steuergerät EBS-ECU 24 der elektrischen Betriebsbremseinrichtung (EBS) angesteuert, welches wiederum mit dem Datenbus CAN J1939 in Kommunikationsverbindung steht.

In dem Zugfahrzeug sind folglich das Steuergerät ECPB-ECU 40 (siehe Fig.2) der elektrischen Feststellbremssteuerung ECPB und das Steuergerät EBS-ECU 24 (siehe Fig.3) der elektrisch gesteuerten Betriebsbremseinrichtung (EBS) verbaut und mit einem gemeinsamen Datenbus, z.B. dem Fahrzeugdatenbus CAN J1939 verbunden. Dann ergeben sich Möglichkeiten der gegenseitigen Überwachung und genaueren Fehlerlokalisierung in der Feststellbremseinrichtung ECPB und in der Betriebsbremseinrichtung EBS.

Wenn der Fahrer die Feststellbremse durch Betätigung der Handbetätigungseinrichtung 5 einlegt, muss die vom port 22 des Parkbremsmoduls PBM 3 (Fig.2) zum port 43 des Anhängersteuermoduls TCM 9 (Fig.3) führende pneumatische Steuerleitung 6 entlüftet werden, da Anhängersteuermodule den steuerseitig eingesteuerten Druck invertieren, so dass port 22 des Anhängersteuermoduls TCM 9 belüftet werden muss, um die Bremsen des Anhängers in Zuspannstellung zu bringen. Die Pneumatik des Anhängersteuermoduls TCM 9, das zur elektrischen Betriebsbremseinrichtung EBS gehört, muss daher Druck in der Steuerleitung zum Anhänger aufbauen (inverse Drucksteuerung), d.h. an seinem port 22. Dieser Druck am port 22 des TCM 9 wird vom Drucksensor PS im Anhängersteuermodul TCM 9 erfasst und an die EBS-ECU 24 übermittelt, welches das Steuergerät der elektrischen Betriebsbremseinrichtung EBS darstellt.

Über den CAN-Datenbus J1939 als Kommunikationsverbindung zwischen der EBS-ECU 24 als Steuergerät der elektrischen Betriebsbremseinrichtung EBS und der ECPB-ECU 40 als Steuergerät der Feststellbremseinrichtung ECPB kann die ECPB-ECU 40 der Feststellbremseinrichtung ECPB den Druck an port 22 des Anhängersteuermoduls TCM 9 abfragen. Wird dieser Druck am port 22 des Anhängersteuermoduls TCM 9 nicht aufgebaut, so ist die Feststellbrems-Funktion fehlerhaft oder der Vorratsdruck an port 1 des Feststellbremsmoduls PBM 3 oder an port 1 des Anhängersteuermoduls TCM 9 zu gering.

Unter der Voraussetzung, dass die Entlüftung der Federspeicherbremszylinder 10 im Zugfahrzeug erfolgreich war, sind folgende Fehler möglich :
1. Es ist kein Vorratsdruck am port 1 des Anhängersteuermoduls TCM 9 vorhanden.
   - Der über den Datenbus CAN J1939 an die ECPB-ECU 40 übermittelte Wert für den Vorratsdruck ist Null.
   - Es erfolgt jedoch keine Fehleranzeige, da ein Fehler in der Druckluftversorgung auch als normaler Betriebszustand vorliegen kann, wenn beispielsweise der Druckluftvorrat noch nicht befüllt ist.
   - Es wird keine Rückfallebene (back-up) eingenommen, da der Zustand der Druckluftversorgung weder vom elektronischen Betriebsbremssystem EBS noch von der Feststellbremseinrichtung ECPB beeinflussbar ist. Da jedoch auch die Vorratsleitung zum Anhänger (port 21 des Anhängersteuermoduls TCM 9) entlüftet ist, bremst der Anhänger über die Abreißfunktion automatisch ein.
2. Das 3/2-Wege-Magnetventil 39 (Testmagnet) im Parkbremsmodul PBM 3 wird fälschlicherweise bestromt, beispielsweise aufgrund eines Fehler in der ECPB-ECU 40.
   - Der CAN J1939 Datenbus meldet einen ausreichenden Vorratsdruck. Es erfolgt eine Ventilrückmeldeprüfung durch die ECPB-ECU 40 im Rahmen der Eigenüberwachungsroutinen.
   - Es erfolgt keine Fehleranzeige durch die EBS-ECU 24, da der Fehler in der Feststellbremseinrichtung ECPB liegt, jedoch erfolgt eine Fehlermeldung durch die ECPB-ECU 40, z.B.: "Ventilrückmeldefehler im 3/2-Wege-Magnetventil 39".
   - Als Rückfallebene sendet die ECPB-ECU 40 einen Befehl an die EBS-ECU 24, den Druck zum Anhänger elektrisch einzusteuern.
3. Die Vorratsleitung (port 1 an TCM 9) zum Anhängersteuermodul TCM 9 ist gerissen oder verstopft.
   - der CAN J1939 Datenbus meldet einen ausreichenden Vorratsdruck. Die ECPB-ECU 40 sendet einen Befehl an die EBS-ECU 24, den Druck zum Anhänger elektrisch einzusteuern. Gelingt dies nicht, wird die EBS-ECU 24 nach einiger Zeit erkennen, dass keine Belüftung der Steuerleitung (port 22) zum Anhänger möglich ist, und einen entsprechenden Fehler setzen.
   - Durch die ECPB-ECU 40 erfolgt keine Fehleranzeige, da der Fehler in der Betriebsbremseinrichtung EBS vorliegt, wobei die EBS-ECU 24 "Fehler in der Vorratsleitung (port 1) zum Anhängersteuermodul TCM 9" meldet.
   - Es existiert keine Rückfallebene, da weder die Betriebsbremseinrichtung EBS noch die Feststellbremseinrichtung ECPB eine Eingriffsmöglichkeit hat. Da jedoch auch die Vorratsleitung (port 21) zum Anhänger entlüftet ist, bremst der Anhänger über die Abreißfunktion automatisch ein.
4. Das 3/2-Wege-Magnetventil 39 (Testmagnet) klemmt mechanisch oder die Leitung zum port 43 des Anhängersteuermoduls TCM 9 ist verstopft.
   - Dies wird erkannt, weil keiner der anderen Fehler vorliegt.
   - Es erfolgt eine Fehleranzeige durch die ECPB-ECU 40 wie z.B. "Leitung zum port 43 des Anhängersteuermoduls TCM 9 ist verstopft oder 3/2-Wege-Magnetventil (Testmagnet) 39 ist mechanisch defekt". Durch die EBS-ECU 24 erfolgt keine Fehlermeldung, da der Fehler im Bereich der Feststellbremseinrichtung ECPB aufgetreten ist.
   - Als Rückfallebene sendet die ECPB-ECU 40 den Befehl an die EBS-ECU 24, den Druck zum Anhänger elektrisch einzusteuern.

Ohne die Abfrage des Anhängerdrucks an port 22 des Parkbremsmoduls PBM 3 bzw. an port 43 des Anhängersteuermoduls 9 wäre der Fehler nicht erkannt worden. Durch den Einsatz der elektrischen, mittels der EBS-ECU 24 gesteuerten Aktuatoren können nach der Erkennung des Fehlers die möglichen Ursachen besser eingegrenzt werden und beim Vorliegen gestimmter Ursachen eventuell eine Backup-Funktion über die EBS-ECU 24 aktiviert werden.

Die einen Fehler oder eine Störung in der elektrischen Feststellbremseinrichtung ECPB im Rahmen einer Selbstüberwachung detektierenden Sensoren beinhalten folglich den Drucksensor 36 im Parkbremsmodul PBM 3 sowie die Magnetventile 34, 37, 38 und 39 im Parkbremsmodul PBM 3 zur Druckregelung am port 22 und zum Ausführen der Testfunktion.

Der elektrischen Betriebsbremseinrichtung EBS zugeordnete Sensoren und Aktuatoren, welche den Fehler oder die Störung in wenigstens einer Funktion der elektrischen Feststellbremseinrichtung ECPB erkennen und/oder eingrenzen und/oder ein Notlaufprogramm der elektrischen Betriebsbremseinrichtung EBS als Ersatz für die gestörte Funktion der elektrischen Feststellbremseinrichtung ECPB aktivieren, beinhalten einen Drucksensor im Anhängersteuermodul TCM 9 als Sensor und die Magnetventile im Anhängersteuermodul TCM 9 zur Druckregelung als Aktuatoren.

### Bezugszahlentabelle

- 1: Druckluftvorrat
- 2: Steuerleitung
- 3: Parkbremsmodul PBM
- 4: elektrische Steuerleitungen
- 5: Handbetätigungseinrichtung
- 6: pneumatische Steuerleitung
- 7: pneumatische Steuerleitungen
- 8: pneumatische Vorratsleitungen
- 9: Anhängersteuermodul TCM
- 10: Federspeicherbremszylinder
- 11: Druckluftvorrat
- 12: Druckluftvorrat
- 13: pneumatische Vorratsleitung
- 13a: pneumatische Vorratsleitung
- 14: Fußbremsmodul
- 15: pneumatische Steuerleitung
- 16: pneumatische Steuerleitung
- 17: pneumatische Vorratsleitung
- 18: pneumatische Vorratsleitung
- 19: Vorderachs-Druckregelmodul
- 20: Druckleitungen
- 21: Drucksteuerventile
- 22: Betriebsbremszylinder
- 23: Druckregelmodul
- 24: Steuergerät (ECU) des elektronischen Bremssystems (EBS)
- 25: elektrische Steuerleitungen
- 26: elektrische Steuerleitungen
- 27: elektrische Energieversorgungsleitungen und CAN-Datenbus
- 28: elektrische Energieversorgungsleitungen und CAN-Datenbus
- 29: Sensorkabel
- 30: Radgeschwindigkeitssensoren
- 31: Bremsdruckleitungen
- 33: CAN (Control Area Network) -Datenbusleitungen
- 34: Relaisventilteil
- 36: Drucksensor
- 37: bistabiles 3/2-Wege-Magnetventil
- 38: 2/2-Wege-Magnetventil
- 39: 3/2-Wege-Magnetventil (Testmagnet)
- 40: ECPB-ECU

## Patentansprüche

1. Überwachungseinrichtung zur Überwachung von Systemen eines Fahrzeugs, von denen wenigstens einige Systeme Selbstüberwachungsroutinen zur Selbstüberwachung aufweisen, **dadurch gekennzeichnet, dass** bei Detektierung einer Störung oder eines Fehlers in wenigstens einer einem ersten der Systeme in Form einer elektrischen Feststellbremseinrichtung (ECPB) zugeordneten Funktion durch Selbstüberwachungsroutinen dieses ersten Systems in Form der elektrischen Feststellbremseinrichtung (ECPB) ein zweites System (EBS) in Form einer elektrischen Betriebsbremseinrichtung (EBS) eines Zugfahrzeugs einer Zugfahrzeug-Anhängerkombination durch das eine, den Fehler oder die Störung aufweisende erste System in Form der elektrischen Feststellbremseinrichtung (ECPB) aktiviert wird, um durch dem zweiten System in Form der elektrischen Betriebsbremseinrichtung (EBS) zugeordnete Sensoren den Fehler oder die Störung in der wenigstens einen Funktion des ersten Systems in Form der elektrischen Feststellbremseinrichtung (ECPB) zu erkennen und/oder einzugrenzen und um ein Notlaufprogramm des zweiten Systems in Form der elektrischen Betriebsbremseinrichtung (EBS) als Ersatz für die gestörte Funktion des ersten Systems in Form der elektrischen Feststellbremseinrichtung (ECPB) zu aktivieren.

2. Überwachungseinrichtung nach Anspruch 1, **dadurch gekennzeichnet, dass** die Eigenüberwachungsroutinen einen Fehler oder eine Störung der wenigstens einen Funktion des ersten Systems in Form der elektrischen Feststellbremseinrichtung (ECPB) durch die Art der von dem ersten System in Form der elektrischen Feststellbremseinrichtung (ECPB) ausgesteuerten Signale und/oder durch ein Ausbleiben von von dem ersten System in Form der elektrischen Feststellbremseinrichtung (ECPB) ausgesteuerten Signale erkennen.

3. Überwachungseinrichtung nach Anspruch 1 oder 2, **dadurch gekennzeichnet, dass** die der elektrischen Betriebsbremseinrichtung (EBS) zugeordneten Sensoren wenigstens einen Drucksensor eines Anhängersteuermoduls (TCM, 9) und die der elektrischen Betriebsbremseinrichtung (EBS) zugeordneten Aktuatoren Magnetventile des Anhängersteuermoduls (TCM 9) zur Druckregelung beinhalten.

4. Überwachungseinrichtung nach einem der vorhergehenden Ansprüche, **dadurch gekennzeichnet, dass** die einen Fehler oder eine Störung in der elektrischen Feststellbremseinrichtung (ECPB) im Rahmen der Selbstüberwachung detektierenden Sensoren wenigstens einen Drucksensor (36) eines Parkbremsmoduls (PBM, 3) sowie Magnetventile (34, 37, 38) des Parkbremsmodul (PBM 3) zur Druckregelung beinhalten.

## Claims

1. Monitoring system for monitoring systems of a vehicle, whereof at least some systems include self-monitoring routines for self-monitoring, **characterised in that,** when a malfunction or a fault is detected in at least one function associated with a first one of said systems in the form of an electric parking brake device (ECPB) by self-monitoring routines of said first system (EBS) in the form of the electric parking brake device (ECPB), a second system in the form of an electric service brake device (EBS) of a towing vehicle of a towing vehicle/trailer combination is activated by said first system in the form of the electric parking brake device (ECPB) exhibiting said fault or said malfunction in order to detect and/or to isolate the fault or malfunction in the at least one function of the first system in the form of the electric parking brake device (ECPB) by means of sensors assigned to the second system in the form of the electric service brake device (EBS), and in order to activate a limp-home mode of the second system in the form of the electric service brake device (EBS) to replace the impaired function of the first system in the form of the electric parking brake device (ECPB).

2. Monitoring device according to claim 1, **characterised in that** said self-monitoring routines detect a fault or a malfunction of said at least one function of said first system the form of the electric parking brake device (ECPB) by the type of the signals output by said first system the form of the electric parking brake device (ECPB) and/or by the non-appearance of signals output by said first system the form of the electric parking brake device (ECPB).

3. Monitoring device according to claim 1 or 2, **characterised in that** the sensors assigned to the electric service brake device (EBS) comprise at least one pressure sensor of a trailer control module (TCM, 9) whilst the actuators assigned to the electrical service brake device (EBS) comprise solenoid valves of the trailer control module (TCM 9) for pressure control.

4. Monitoring device according to any of the preceding claims, **characterised in that** the sensors detecting a fault or a malfunction in the electric parking brake device (ECPB) within the general framework of the self-monitoring function comprise at least one pressure sensor (36) of a parking brake module (PBM, 3) as well as solenoid valves (34, 37, 38) of said parking brake module (PBM 3) for pressure control.

## Revendications

1. Dispositif de contrôle pour contrôler des systèmes d'un véhicule, dont au moins certains systèmes ont des programmes d'autocontrôle pour l'autocontrôle, **caractérisé en ce que**, à la détection d'une défaillance ou d'un défaut d'au moins une fonction associée à un premier des systèmes sous la forme d'un dispositif (ECPB) électrique de frein de stationnement, par des programmes d'autocontrôle de ce premier système, sous la forme du dispositif (ECPB) électrique de frein de stationnement, un deuxième système (EBS), sous la forme d'un dispositif (EBS) électrique de frein de service d'un véhicule de traction d'une combinaison véhicule de traction-remorque, est activé par le un premier système, comportant le défaut ou la défaillance, sous la forme du dispositif (ECPB) électrique de frein de stationnement, pour détecter et/ou localiser, par des capteurs associés au deuxième système sous la forme du dispositif (EBS) électrique de frein de service, le défaut ou la défaillance de la au moins une fonction du premier système sous la forme du dispositif (ECPB) électrique de frein de stationnement et pour activer un programme de secours du deuxième système sous la forme du dispositif (EBS) électrique de frein de service, en remplacement de la fonction défaillante du premier système sous la forme du dispositif (ECPB) électrique de frein de stationnement.

2. Dispositif de contrôle suivant la revendication 1, **caractérisé en ce que** les programme d'autocontrôle détectent un défaut ou une défaillance de la au moins une fonction du premier système sous la forme du dispositif (ECPB) électrique de frein de stationnement par le type des signaux émis par le premier système sous la forme du dispositif (ECPB) électrique de frein de stationnement et/ou par un défaut de signaux émis par le premier système sous la forme du dispositif (ECPB) électrique de frein de stationnement.

3. Dispositif de contrôle suivant la revendication 1 ou 2, **caractérisé en ce que** les capteurs associés au dispositif (EBS) électrique de frein de service comportent au moins une sonde de pression d'un module (TCM, 9) de commande de remorque et les actionneurs associés au dispositif (EBS) électrique de frein de service comportent des électrovannes du module (TCM, 9) de commande de remorque pour la régulation de la pression.

4. Dispositif de contrôle suivant l'une des revendications précédentes, **caractérisé en ce que** les capteurs détectant, dans le cadre de l'autocontrôle, un défaut ou une défaillance du dispositif (ECPB) électrique de frein de stationnement comportent une sonde (36) de pression d'un module (PBM, 3) de frein de stationnement ainsi que des électrovannes (34, 37, 38) du module (PBM, 3) de frein de stationnement pour la régulation de la pression.
